(19) Europäisches Patentamt
European Patent Office
Office européen des brevets

(11) **EP 1 927 915 B1**

(12) **EUROPEAN PATENT SPECIFICATION**

(45) Date of publication and mention
of the grant of the patent:
**07.11.2012 Bulletin 2012/45**

(51) Int Cl.:
***G05B 23/02*** *(2006.01)*    ***G05B 13/04*** *(2006.01)*

(21) Application number: **07254583.3**

(22) Date of filing: **26.11.2007**

(54) **State initialization for gas turbine engine performance diagnogtics**

Statusinitialisierung zur Gasturbinen-Antriebsleistungsdiagnose

Initialisation d'état pour diagnostics de performance de moteur à turbine à gaz

(84) Designated Contracting States:
**DE GB**

(30) Priority: **29.11.2006 US 605724**

(43) Date of publication of application:
**04.06.2008 Bulletin 2008/23**

(73) Proprietor: **United Technologies Corporation
Hartford, CT 06101 (US)**

(72) Inventor: **Volponi, Allan J.
West Simsbury, CT 06092 (US)**

(74) Representative: **Leckey, David Herbert
Dehns
St Bride's House
10 Salisbury Square
London
EC4Y 8JD (GB)**

(56) References cited:
**EP-A- 1 418 481    US-A1- 2005 209 823**

Remarks:
The file contains technical information submitted after the application was filed and not included in this specification

# EP 1 927 915 B1

**Description**

BACKGROUND OF THE INVENTION

The invention relates generally to the field of gas turbine engine modeling. More specifically, the invention relates to state-based, gas turbine engine module initialization methods and systems that allow the true level of performance to be tracked enabling engine-to-engine performance comparisons.

EP 1 418 481 A1, over which claim 1 is characterised, describes a method for performing turbine performance diagnostics.

The area of gas turbine performance diagnostics concerns tracking changes in engine module performance measures, such as efficiency and flow parameters, as the engine deteriorates over time. The engine modules that are tracked are typically the compressor and turbine elements of an engine. For example, for a two-spool turbofan engine, the modules would generally be the fan, the low pressure compressor (LPC), the high pressure compressor (HPC), the high pressure turbine (HPT), and the low pressure turbine (LPT). The primary sources of information driving this methodology are operational measurements acquired along an engine's gas path, such as temperatures, pressures, speeds, etc. Tracking fleets of engines across a wide customer/aircraft base offers the added complexity that the measured parameters are affected by different instrumentation calibration and recording fidelity that proves to be non-repeatable across installations.

Traditional performance estimation methods employ forms of predictor-corrector estimation schemes. These methods use past performance estimates as a *priori* information to calculate current performance estimates.

A successful diagnostic methodology must provide an accurate performance initialization state. Current diagnostic methods zero-out any observed difference between measurements and a base reference level during initialization and after engine installation, begin performance tracking from a zero level. Using this method, a newly overhauled engine and a partially deteriorated engine would receive the same consideration at initialization and the true level of degradation across the two engines would be masked. This would make it difficult to track performance across a fleet of engines with any degree of regularity and accuracy.

State initialization provides a more accurate starting point from which to track long-term engine module degradation over time than current practices. It differentiates engine performance from engine-to-engine in a fleet at the time of installation and provides an accurate basis for engine comparisons across a fleet. This philosophy supports engine on wing tracking and engine removal scheduling processes typically performed by engine manufacturers, operators, and overhaul facilities.

SUMMARY OF THE INVENTION

Although there are various methods and systems employing forms of predictor-corrector estimation schemes, such models are not completely satisfactory. The inventor has discovered that it would be desirable to have methods and systems using a state-based, engine initialization procedure that allows the true level of performance to be tracked thereby enabling engine-to-engine performance comparisons. The invention describes an initialization method for performing gas turbine Module Performance Analysis (MPA) via a recursive state estimation. Included is a description of data validity measures and maintenance impact and accommodation on the initialized, or re-initialized, state.

State estimation is a part of diagnosis, so faults and undesirable states may be detected to allow for remedial actions to be taken. State estimation may provide prognostic information, identifying components or systems that are likely to fail.

According to the present invention there is provided an initialization method for ascertaining the performance levels of gas turbine engine modules as claimed in claim 1.

An embodiment of the method includes acquiring gas turbine engine test stand data for use as *a priori* data when performing the recursive state estimation.

The details of one or more embodiments of the invention are set forth in the accompanying drawings and the description below. Other features and advantages of the invention will be apparent from the description and drawings, and from the claims.

BRIEF DESCRIPTION OF THE DRAWINGS

FIG. 1 is a block diagram of an exemplary state initialization method.

FIG. 2A is an exemplary plot showing a two level, bimodal data distribution.

FIG. 2B is an exemplary plot showing a step, bimodal data distribution.

FIG. 2C is an exemplary plot showing a step, bimodal data distribution.

FIG. 3A is an exemplary plot showing potential outliers.

DETAILED DESCRIPTION

Embodiments of the invention will be described with reference to the accompanying drawing figures wherein like numbers represent like elements throughout. Further, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. The terms "mounted," "connected," and "coupled" are used broadly and encompass both direct and indirect mounting, connecting, and coupling. Further, "connected" and "coupled" are not restricted to physical or mechanical connections or couplings.

The invention is not limited to any particular software language described or implied in the figures. A variety of alternative software languages may be used for implementation of the invention.

The invention is a modular framework and may be deployed as software as an application program tangibly embodied on a program storage device. The application code for execution can reside on a plurality of different types of computer readable media known to those skilled in the art.

The invention is an initialization method for performing gas turbine engine Module Performance Analysis (MPA) using a recursive state estimation. The method determines a measurement configuration from an input data stream that allows for a robust initialization across a variety of engine models and aircraft installations.

A statistically sound set of engine data is selected for initialization processing and submitted to a number of data validity checks that include engine parameter measurement bimodal distribution and outlier screening. The screening removes spurious data points from consideration and checks for anomalous data that may affect initialization results. Once the input data set is screened, and any suspicious data removed, a recursive estimation method is employed to estimate the performance state of selected engine modules. If maintenance and/or ground test information is available, this information may be used as a *priori* data to focus the state initialization process.

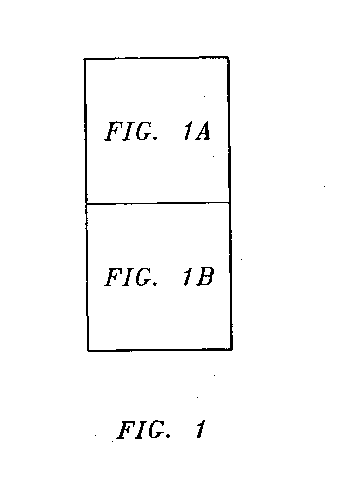

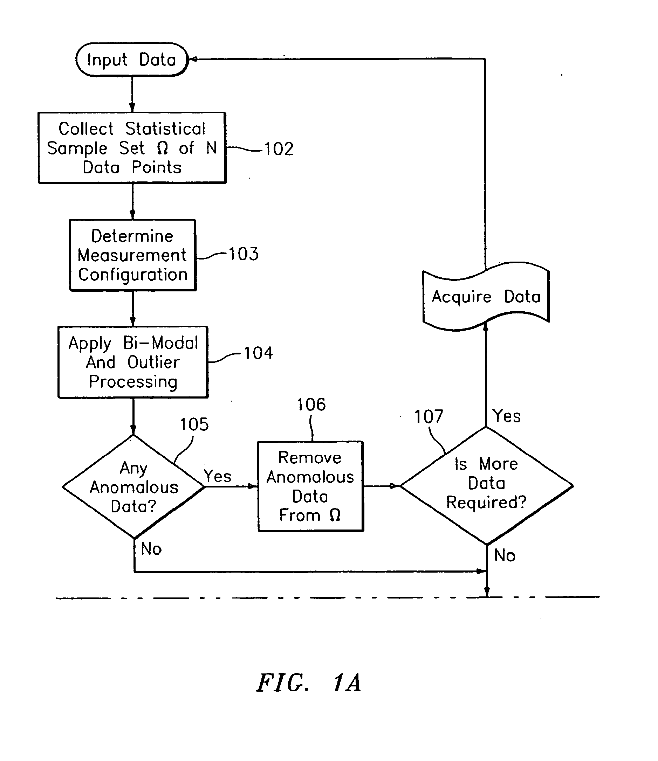

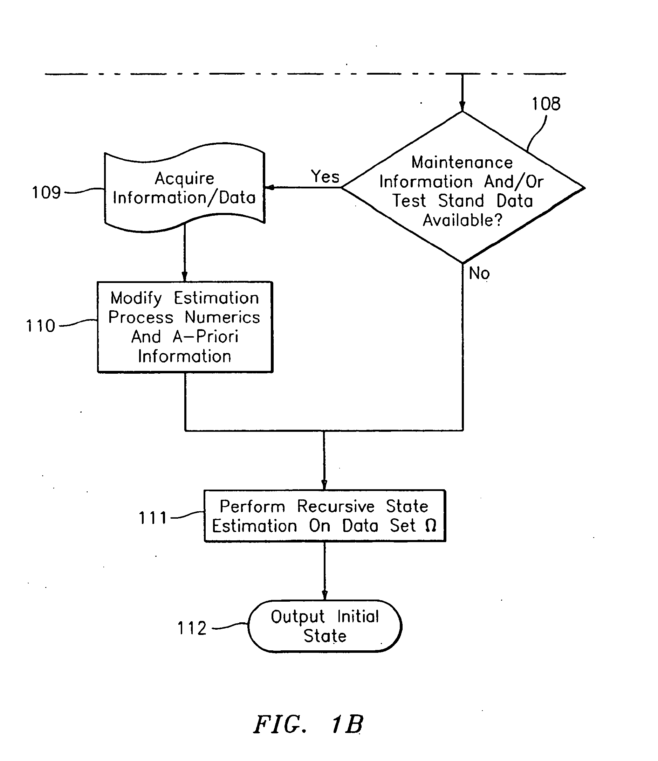

Shown in FIG. 1 is the method of the invention. The method begins with acquiring a predetermined number of engine parameter data samples to perform the initialization (step 102).

The data may be time averaged snapshot data, for example, every 10 seconds, of various gas path parameters. The parameters may include rotational speeds, temperatures, pressures and flows. The total sample size selected should be statistically significant to allow accurate calculations, but not too large, where significant engine degradation may occur before the end of a sample period. Since the data that is typically collected for the purpose of tracking module performance changes is snapshot data from a stable cruise flight condition, the number of samples reserved for initialization may be small, in a range of from 15 to 30 data samples.

A data set of samples is processed where each data set comprises a vector of gas path measurement Δ parameters. These parameters may be rotational speeds, temperatures, pressures, and others, observed at various stages throughout the engine. An engine model calibrated to represent a nominal production engine may be used as a baseline reference to calculate percent Δ parameters. The percent Δ vectors are denoted as $Z_k(i)$, where $i$ =1,2,3,...,$m$ , $m$ is the number of individual gas path parameters being monitored and reduced to percent Δs and $k$ is the data sample number in discrete time.

To assess the performance state of the engine, a sample of measurement Δ vectors, denoted as Ω are obtained. The set of initialization measurement Δ vectors is defined as

$$\Omega = \left\{ Z_k \,\middle|\, k = 1,2,...,N \right\}. \qquad (1)$$

The sample size N is predetermined by a user and may depend on the particular application.

Once the initialization data set Ω is acquired, a measurement configuration (step 103) is determined from the initialization data set. It is not uncommon for flight data to experience periodic parameter measurement drop-outs (data lost during acquisition). A skilled user may determine, based on the placement and frequency of measured parameter drop-outs, whether or not a particular parameter should be included or excluded from a performance analysis.

Flight data is also subject to noise and other anomalies that may corrupt the initialization results. These anomalies must be detected before the initialization process continues. Because of possible instrumentation and data acquisition problems, some measurement parameters may be missing from some of the N data samples comprising a percent Δ

vector $Z_k(i)$ or entirely from the initialization set $\Omega$. Since performance calculations are based on vector quantities $Z_k$, all of its $m$ components must be present. Zeros are valid quantities representing a 0 percent $\Delta$, or nominal performance.

If a particular measured parameter is intermittently present or missing entirely, it may be removed from consideration. A skilled user may make this determination. The result of the measurement configuration (step 103) is a determination of what parameters $m$ comprise a percent $\Delta$ vector $Z_k$. All of the vectors in (1) will have the same size $m$ where each component $i$ will be present.

Prior to assembling the data set $\Omega$, a test is performed on the data $Z_k(i)$ comprising the measured parameters since there may be outliers or other anomalies present in the data. The purpose of the state initialization is to establish a reference performance level as a baseline for subsequent analysis as more flight data is acquired over time. The presence of outliers in a sampled engine parameter may corrupt the state initialization and must be detected. An assumption is that the state of the engine has not changed during the initialization period. Any anomalous behavior detected in the measurement parameter data set may be indicative of a performance state change or another malfunction that would corrupt the initial state estimation and must be dealt with.

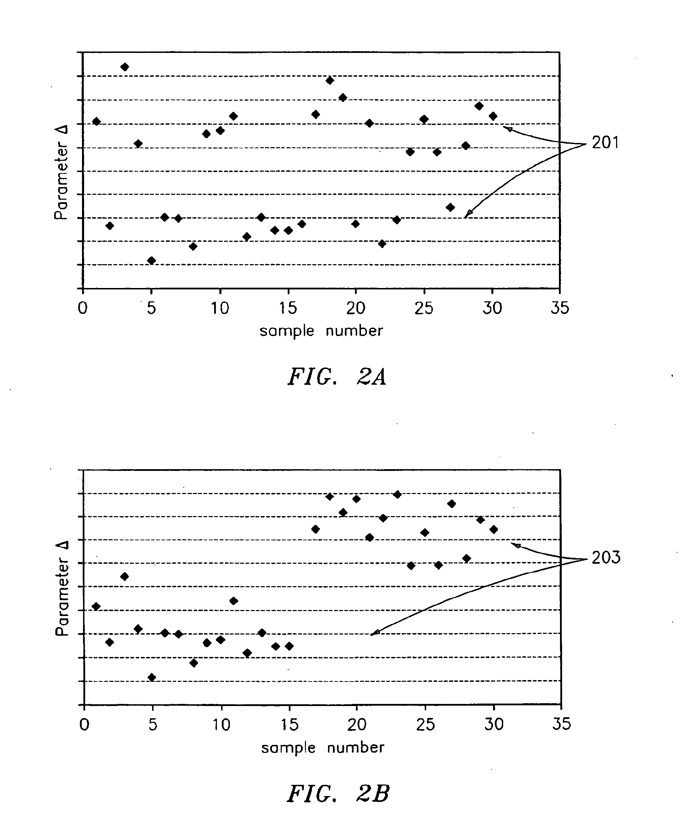

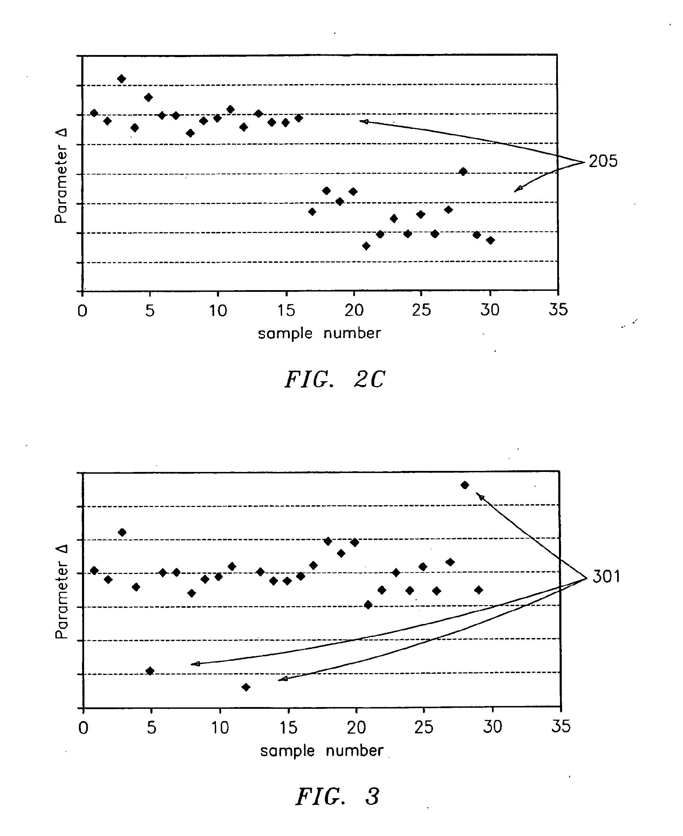

Anomaly data such as bimodal data distributions and outliers may be identified (step 104). Shown in FIGs. 2A, 2B and 2C are examples of bimodal data distributions. FIG. 3 shows a plot of sample data exhibiting intermittent outliers 301.

FIG. 2A shows a plot of data samples 201 uniformly distributed over time that exhibit a two level, bimodal distribution. FIGs. 2B and 2C show bimodal distributions caused by an upward 203 and downward 205 shift in amplitude, respectively, indicating a possible engine or sensor fault occurrence. An initialization should not proceed using anomalous data.

The $Z_k$ vectors in $\Omega$ may be tested for the presence of outliers and anomalies (step 104). All samples over time for a given parameter may be examined. Bimodal data distributions are potential indicators of anomalous data behavior such as data acquisition anomalies, performance state changes, or potential engine system malfunctions. Methods using histograms and graphical analysis may be used to test for the presence of anomalous conditions. Outliers in the data set are indicative of potential (spurious) data acquisition problems. If the problem was not spurious, the outlier would be exhibit a periodic frequency and manifest itself as a bimodal problem.

If anomalous data is detected (step 105), the data identified as anomalous may be removed (step 106) to mitigate the risk of corrupting the (performance) state estimation process. The removal of data samples must be made on a vector basis, *i.e.,* if the $i^{th}$ measured parameter $\Delta$ of the $k^{th}$ data sample $Z_k(i)$ is determined to be abnormal, the entire $Z_k$ vector must be removed from consideration. This is because the initial performance state estimation is a vector estimation process. Discarding rogue data samples reduces the sample size N of the initialization data set $\Omega$.

If the sample size N has been reduced to a level that is below the predetermined level (step 107), for example, less than the sample size ($N$=15), more data will be required in order to ensure a statistically viable initialization data set $\Omega$. In this case, additional data sample vectors from additional flights are added to the adjusted data set $\Omega$ (step 102) until the minimum sample size is achieved and the process may resume.

If there is sufficient data to proceed (step 107), maintenance and engine test stand performance run information may be used if available (steps 108, 109). This information may be used as a *priori* information in the state estimation (step 110).

A recursive performance state estimation process is performed (step 111) using the initialization measurement data set and a *priori* information to produce an estimate of the performance state for each engine module. This quantity defines, in terms of efficiency and flow parameter $\Delta$s, the initial state of the engine from nominal. Subsequent performance analysis may be made relative to this level as data is collected and processed.

A state initialization estimation is a recursive process acting on the initialization data set $\Omega$. The term recursive means that the state estimate $x_0^{(INIT)}$ will be a function of all of the data point vectors in $\Omega$,

$$x_0^{(INIT)} = f\left(Z_k\ in\ \Omega\,,\ k = 1,2,...,N\right). \qquad (2)$$

Estimation methods, some empirical, some physics-model based and others, such as Kalman filters, statistical regression methods, neural networks are combinations of the above. The preferred embodiment of the estimation process is a recursive, predictor-corrector estimator,

$$\hat{x}_1 = f\left(Z_1, x_0^{(a-priori)}\right)$$
$$\hat{x}_2 = f\left(Z_2, \hat{x}_1\right)$$
$$\hat{x}_3 = f\left(Z_3, \hat{x}_2\right) \qquad (3)$$
$$\vdots$$
$$x_0^{(INIT)} = \hat{x}_N = f\left(Z_N, \hat{x}_{N-1}\right).$$

In the method, the final state estimation $\hat{x}_N$ is the estimate for initial state performance $x_0^{(INIT)}$. The estimate is recursively determined by processing all of the data samples in the initialization data set $\Omega$, and any a *priori* information, $x_0^{(a-priori)}$, that may be available from test cell acceptance test monitoring of the engine, maintenance activities, etc. (step 108).

All of the *x* vectors are $n \times 1$ column vectors and contain the module performance $\Delta$ parameters as elements. The modules of the engine are, but not limited to, the compressor and turbine components of the engine. For example, in a typical two-spool, turbofan engine, there may be five engine modules to consider:

FAN Fan compressor
LPC Low Pressure Compressor (Booster)
HPC High Pressure Compressor
HPT High Pressure Turbine
LPT Low Pressure Turbine

For each of the major modules, there may be two independent performance parameters ($\Delta$s) that vary over time. This information needs to be tracked to yield metrics that benefit maintenance logistics and work scope. These two performance parameters are typically an adiabatic efficiency parameter and a flow parameter.

For the compressor elements FAN, LPC, and HPC, the parameters may be an adiabatic efficiency delta ($\Delta\eta$) and a flow capacity delta ($\Delta FC$). For the turbine elements HPT, and LPT, the parameters may be an adiabatic efficiency delta ($\Delta\eta$) and an effective change in turbine nozzle area that affects flow ($\Delta A$). Therefore, the *x* vectors in (2) and (3) for this example may have 10 components,

$$\left\{x_0^{(a-priori)}, \hat{x}_k, x_0^{(INITi)}\right\} \equiv \begin{bmatrix} \Delta\eta_{FAN} \\ \Delta FC_{FAN} \\ \Delta\eta_{LPC} \\ \Delta FC_{LPC} \\ \Delta\eta_{HPC} \\ \Delta FC_{LPC} \\ \Delta\eta_{HPT} \\ \Delta A_{HPT} \\ \Delta\eta_{LPT} \\ \Delta A_{LPT} \end{bmatrix}. \qquad (4)$$

If maintenance information or prior test stand data analysis is available for the engine in question, this information is obtained (step 109) and analyzed by the user to extract a *priori* information (step 110) that may be leveraged in the recursive state estimation process. This may take the form of specifying an initial estimate, (based on test stand results and maintenance information), for $x_0^{(a-priori)}$, which will be used in the recursive state estimation process (3). Depending on the particular algorithm used in the recursive estimation, *i.e.* the implementation of (3), certain process constants might be adjusted to apply appropriate weight to the a *priori* information.

If no maintenance or test stand information is available (step 108), then $x_o^{(a-priori)} = 0$, which indicates the engine is nominal (zero percent delta from nominal) as the default position to begin the estimation.

The method culminates with the state estimation process (step 111) (3) yielding a performance state estimate $x_0^{(INIT)}$ vector that is the result of the method (step 112) for inclusion in subsequent module performance tracking of the engine.

Subsequent processing for tracking module performance changes would use the same strategy as in (3) wherein, the first data sample available after initialization, $z_1$, would be processed to yield the first performance estimate after initialization as

$$\hat{x}_1 = f(z_1, x_0^{(INIT)}) . \qquad (5)$$

Using the method of the invention, the performance tracking that follows has been initialized. The next data sample $z_2$ would be processed to yield the next performance change estimate,

$$\hat{x}_2 = f(z_2, \hat{x}_1), \qquad (6)$$

and so forth.

One or more embodiments of the present invention have been described. Nevertheless, it will be understood that various modifications may be made without departing from the scope of the invention. Accordingly, other embodiments are within the scope of the following claims.

**Claims**

1. An initialization method for ascertaining the performance levels of gas turbine engine modules comprising:

   acquiring a predetermined number of in-flight data samples corresponding to a predetermined number of engine parameters; **characterised by**:
   performing an anomalous data sample screen on the data samples wherein the anomalous data sample screen comprises screening for bimodal distributions and data sample outliers; and
   performing a recursive state estimation on the predetermined number of in-flight data samples, wherein the state estimation outputs a baseline initial state for each of the predetermined number of engine parameters.

2. The method according to claim 1 further comprising acquiring gas turbine engine test stand data for use as *a priori* data when performing the recursive state estimation.

3. The method according to claim 1 or 2 wherein the anomalous data sample screen further comprises using histograms and graphical analysis to test for the presence of anomalous data.

4. The method according to claim 1 or 2 wherein the predetermined number of data samples corresponding to the engine parameters are arranged as vectors with each vector corresponding to a sample number.

5. The method according to claim 4 further comprising removing a data sample vector if any anomalous data is found.

6. The method according to claim 5 wherein the number of data samples is in a range of from 15 to 30.

**7.** The method according to claim 6 further comprising adding additional data samples if after removing the anomalous data samples, the number of data samples is less than the predetermined number of data samples.

**8.** The method according to claim 7 wherein adding additional data samples further comprises additional flights.

**9.** The method according to claim 8 wherein the recursive state estimation is a predictor-collector.

**10.** The method according to claim 9 wherein the gas turbine engine modules comprise a fan compressor, a low pressure compressor, a high pressure compressor, a high pressure turbine, and a low pressure turbine.

**11.** The method according to claim 10 wherein each of the gas turbine engine modules further comprise at least two performance parameters.

**12.** The method according to claim 11 wherein two performance parameters comprise adiabatic efficiency $\Delta\eta$ and flow $\Delta A$.

**13.** The method according to claim 12 wherein the flow performance parameter is a result of turbine nozzle area change.


**Patentansprüche**

**1.** Initialisierungsverfahren zum Ermitteln von Leistungsstufen von Gasturbinenmaschinenmodulen aufweisend:

Ermitteln einer vorbestimmten Anzahl von Datenproben während eines Fluges entsprechend einer vorbestimmten Anzahl von Maschinenparametern;
**gekennzeichnet durch**:
Durchführen einer Untersuchung der Datenproben auf anomale Datenproben, wobei die Untersuchung auf anomale Datenproben ein Untersuchen auf bimodale Verteilungen und Datenprobenausreißer aufweist; und Durchführen einer rekursiven Zustandsschätzung auf die vorbestimmte Anzahl von Datenproben während des Fluges, wobei die Zustandsschätzung einen Grundlinieninitialzustand für jeden der vorbestimmten Anzahl von Maschinenparametern ausgibt.

**2.** Verfahren gemäß Anspruch 1 weiter aufweisend Erfassen von Gasturbinenmaschinen-Prüfstandsdaten zur Verwendung als a priori-Daten, wenn die rekursive Zustandsschätzung durchgeführt wird.

**3.** Verfahren gemäß Anspruch 1 oder 2, wobei die Untersuchung auf anomale Datenproben weiter Verwenden von Histogrammen und graphischer Analyse aufweist, um auf die Anwesenheit von anomalen Daten zu überprüfen.

**4.** Verfahren gemäß Anspruch 1 oder 2, wobei die vorbestimmte Anzahl von Datenproben, die den Maschinenparametern entspricht, als Vektoren angeordnet werden, wobei jeder Vektor einer Probenzahl entspricht.

**5.** Verfahren gemäß Anspruch 4 weiter aufweisend Entfernen eines Datenprobenvektors, wenn irgendwelche anomalen Daten gefunden werden.

**6.** Verfahren gemäß Anspruch 5, wobei die Anzahl von Datenproben im Bereich von 15 bis 30 ist.

**7.** Verfahren gemäß Anspruch 6 weiter aufweisend Hinzufügen zusätzlicher Datenproben, wenn nach Entfernen der anomalen Datenproben die Anzahl von Datenproben kleiner als die vorbestimmte Anzahl von Datenproben ist.

**8.** Verfahren gemäß Anspruch 7, wobei Hinzufügen zusätzlicher Daten weiter zusätzliche Flüge aufweisen.

**9.** Verfahren gemäß Anspruch 8, wobei die rekursive Zustandsschätzung ein Prädiktor-Korrektor ist.

**10.** Verfahren gemäß Anspruch 9, wobei die Gasturbinemaschinenmodule aufweisen einen Bläserkompressor, einen Niederdruckkompressor, einen Hochdruckkompressor, eine Hochdruckturbine und eine Niederdruckturbine.

**11.** Verfahren gemäß Anspruch 10, wobei jede der Gasturbinenmaschinenmodule weiter wenigstens zwei Leistungsparameter aufweist.

**12.** Verfahren gemäß Anspruch 11, wobei zwei Leistungsparameter ein diabatischen Wirkungsgrad Δη und ein Fluss ΔA sind.

**13.** Verfahren gemäß Anspruch 12, wobei der Flussleistungsparameter ein Ergebnis einer Turbinendüsenflächenänderung ist.

**Revendications**

**1.** Procédé d'initialisation utilisable pour évaluer le niveau de performance de modules de moteur à turbine à gaz comprenant :

l'acquisition d'un nombre prédéterminé d'échantillons de données de vol correspondant à un nombre prédéterminé de paramètres moteur ; **caractérisé par**
l'exécution d'un filtrage d'échantillons de données anomales sur les échantillons de données, ledit filtrage d'échantillons de données anomales comprenant le filtrage de distributions bimodales et de valeurs aberrantes des échantillons de données ; et
l'exécution d'une estimation d'état récursif sur le nombre prédéterminé d'échantillons de données de vol, ladite estimation d'état produisant en sortie un état initial de ligne de référence pour chaque paramètre du nombre prédéterminé de paramètres moteur.

**2.** Procédé selon la revendication 1 comprenant en outre l'acquisition de données de banc d'essai moteur du moteur de turbine à gaz pour leur utilisation en tant que données *a priori* lors de l'estimation d'état récursif.

**3.** Procédé selon la revendication 1 ou la revendication 2, dont le filtrage d'échantillons de données anomales comprend en outre l'utilisation d'histogrammes et d'analyses graphiques pour contrôler la présence de données anomales.

**4.** Procédé selon la revendication 1 ou la revendication 2, dans lequel les échantillons du nombre prédéterminé d'échantillons de données correspondants aux paramètres moteur sont agencés en tant que vecteurs, chaque vecteur correspondant à un numéro d'échantillon.

**5.** Procédé selon la revendication 4, comprenant en outre le retrait d'un vecteur d'échantillon de données si une quelconque donnée anomale est trouvée.

**6.** Procédé selon la revendication 5, dont le nombre d'échantillons de données est dans une fourchette allant de 15 à 30.

**7.** Procédé selon la revendication 6, comprenant en outre l'ajout d'échantillons de données supplémentaires si, après le retrait des échantillons de données anomales, le nombre d'échantillons de données restant est inférieur au nombre prédéterminé d'échantillons de données.

**8.** Procédé selon la revendication 7, dont les échantillons de données supplémentaires comprennent en outre des vols additionnels.

**9.** Procédé selon la revendication 8, dont l'estimation d'état récursif est un prédicteur-collecteur.

**10.** Procédé selon la revendication 9, dont les modules de moteur de turbine à gaz comprennent une soufflante, un compresseur basse pression, un compresseur haute pression, une turbine haute pression, et une turbine basse pression.

**11.** Procédé selon la revendication 10, dont chacun des modules de moteur de turbine à gaz comprend en outre au moins deux paramètres de performance.

**12.** Procédé selon la revendication 11, dont deux paramètres de performance comprennent le rendement de compression adiabatique Δη et le débit ΔA.

**13.** Procédé selon la revendication 12, dont le paramètre de performance de débit est un résultat d'un changement de géométrie de tuyère de turbine.

FIG. 1A

FIG. 1B

FIG. 1

*FIG. 1A*

109 — Acquire Information/Data

Yes

108

Maintenance Information And/Or Test Stand Data Available?

No

110 — Modify Estimation Process Numerics And A–Priori Information

111 — Perform Recursive State Estimation On Data Set $\Omega$

112 — Output Initial State

*FIG. 1B*

*FIG. 2A*

*FIG. 2B*

*FIG. 2C*

*FIG. 3*

**EP 1 927 915 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1418481 A1